(19) Europäisches Patentamt
European Patent Office
Office européen des brevets

(11) Publication number: **0 117 538 A2**

(12) **EUROPEAN PATENT APPLICATION**

(21) Application number: **84101927.6**

(22) Date of filing: **23.02.84**

(51) Int. Cl.³: **C 08 G 63/08**, C 08 G 63/10, C 09 D 5/40

(30) Priority: **24.02.83 US 469433**

(43) Date of publication of application: **05.09.84 Bulletin 84/36**

(84) Designated Contracting States: **BE DE FR GB**

(71) Applicant: **UNION CARBIDE CORPORATION, Old Ridgebury Road, Danbury Connecticut 06817 (US)**

(72) Inventor: **Domeier, Linda Ann, 5 Farm Road, Apartment No. 164, Somerville, N.J. 08876 (US)**
Inventor: **Hsi, Edward Shi Ping, 1110 Cambridge Lane, Bridgewater, N.J. 08807 (US)**

(74) Representative: **Weinhold, Peter, Dr. et al, Patentanwälte Dr. V. Schmied-Kowarzik Dipl.-Ing. G. Dannenberg Dr. P. Weinhold Dr. D. Gudel Dipl.-Ing. S. Schubert Dr. P. Barz Siegfriedstrasse 8, D-8000 München 40 (DE)**

(54) **Polyester polyols and a process for their production.**

(57) Described herein are polyester polyols having a molecular weight of less than about 3000 and produced from the ring opening reaction of a lactone with a polyfunctional initiator. These polyester polyols have increased reactivity with curing agents such as melamines, epoxides, and isocyanates.

EP 0 117 538 A2

# POLYESTER POLYOLS BASED ON LACTONES

## BACKGROUND OF THE INVENTION

Polyester polyols, particularly those produced by the polymerization of a lactone such as epsilon-caprolactone using an active hydrogen compound as initiator, are well known and are utilized in a variety of applications. For example, U.S. Patents 3,897,399; 3,169,945, 3,021,309-317 and British publication GB 2093853 describe the preparation of polyester polyols by the polymerization of a lactone with an active hydrogen compound as an initiator.

One field of use for polyester polyols is in their reaction with isocyanates to produce urethane coatings. These coatings are known for their excellent combination of chemical resistance and physical properties. Other uses of the polyester polyols are the reaction products with, for example, epoxides and melamines.

In such reactions it is often desirable that the polyester polyol have as high a reactivity as is achievable to allow short reaction times and/or mild reaction conditions.

## THE INVENTION

This invention is directed to a polyester polyol and a process for its production. The polyester polyol of this invention has a molecular weight of less than about 3000 and is produced from the ring opening reaction of a lactone with a polyfunctional initiator, wherein the minimum percent of lactone hydroxyls, y, (i.e. those hydroxyls attached to an open lactone) in the

polyester polyol is a function of the mole ratio, x, of lactone units to active hydrogens in the initiator and can be defined as $y=52.5x$ for $x>0$ to 1.5 and $y=2.11x + 75.6$ for $x > 1.5$.

The polyester polyols of this invention have increased reactivity with curing agents such as melamines, epoxides, and isocyanates and in many cases exhibit lower melting points which increase their ease of handling.

The polyester polyols of this invention are characterized by the presence of a higher percentage of lactone derived hydroxyl groups than are present in known polyester polyols. The lactone hydroxyl groups are represented by A in the reaction scheme depicted below. The percent lactone hydroxyl groups in the product depends on the distribution of lactone units in the polyol and on the molecular weight. For example, for the reaction of diethylene glycol, a common initiator having a functionality of 2, and epsilon-caprolactone, the product polyol has been found to contain a mixture of disubstituted, monosubstituted and unsubstituted diethylene glycol units. The ratio of these different components is dependent on the molecular weight of the polyol and the method used to make the polyol.

This reaction and the different types of polyol species formed are depicted below:

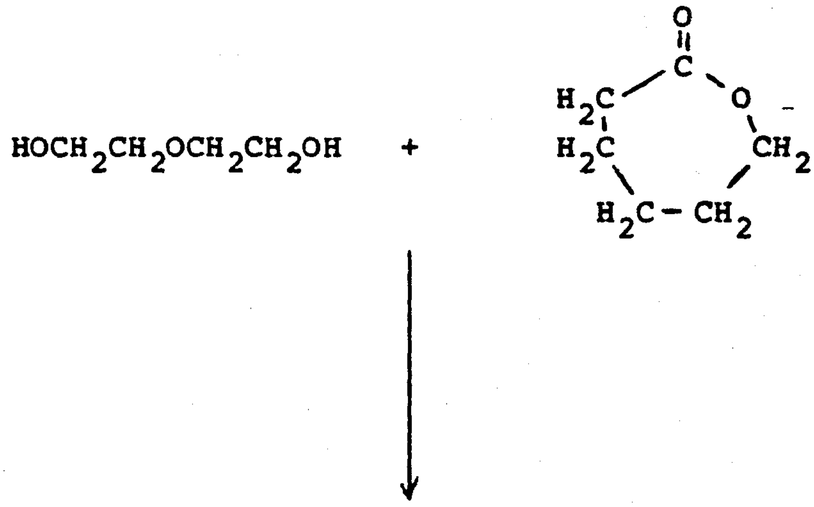

$HOCH_2CH_2OCH_2CH_2OH$

UNSUBSTITUTED

$$HOCH_2CH_2OCH_2CH_2O\underbrace{\left[\overset{O}{\overset{\|}{C}}CH_2CH_2CH_2CH_2CH_2O\right]_N H}_{A}$$

MONOSUBSTITUTED

$$\underbrace{H\left[OCH_2CH_2CH_2CH_2CH_2\overset{O}{\overset{\|}{C}}\right]_M}_{A} OCH_2CH_2OCH_2CH_2O\underbrace{\left[\overset{O}{\overset{\|}{C}}CH_2CH_2CH_2CH_2CH_2O\right]_N H}_{A}$$

DISUBSTITUTED

For initiators with functionality greater than 2, a similar relationship exists for the initiator units having various degrees of substitution. The composition of a given polyol product is therefore dependent upon the ratio of these polyol types having various degrees of substitution. The reactivity of the polyol product and other characteristics such as melting point are in turn dependent upon the polyol composition.

At a given molecular weight and ratio of lactone units to active hydrogens in the initiator,

it has been found that polyol products with distinctly differing distributions of the polysubstituted species can be prepared. It is preferred to have higher levels of the polysubstituted species. A useful measure of the lactone distribution in the polyol is the percent lactone hydroxyls, y. Lactone hydroxyls are defined as those hydroxyls resulting from the ring opening reaction of a lactone by a suitable initiator. The number of opened lactone units in the polylactone may vary obviously. These lactone hydroxyls are distinguished from those hydroxyls or other active hydrogen species which are part of the original organic initiator.

The lactones suitable for use herein are compounds having the following formula:

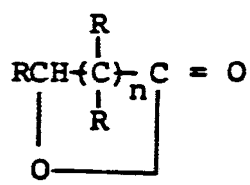

wherein n is at least four and wherein the R's are independently selected from hydrogen, alkyl, cycloalkyl, alkoxy, halogen, or single ring aromatic hydrocarbon radicals, and the total number of carbon atoms in the substituents on a lactone ring does not exceed about twelve. Preferred lactones are the epsilon-caprolactones wherein n = 4 and R is hydrogen or alkyl. Preferably, the lactone is epsilon-caprolactone, or a methyl epsilon-caprolactone, or a mixture of isomeric methyl epsilon-caprolactones, or a mixture of one or more isomeric methyl epsilon-caprolactones with epsilon-caprolactone.

The polyfunctional initiator may be a single compound or it may be more than one compound.

The initiators that are preferred in this invention are represented by the general formula

$$R^1(YH)_a$$

in which $R^1$ is an organic radical selected from the group consisting of aliphatic, cycloaliphatic, aromatic and heterocyclic radicals, a is a number equal to the functionality of the initiator, and the Y is selected from -O-, -NH-,-$NR^2$- ($R^2$ is selected from alkyl, aryl, aralkyl or cycloalkyl), -S-, and -C(O)O-.

The type of YH groups in a single initiator may be identical or may vary as in aminoalcohols, hydroxycarboxylic acids, and the like.

Preferred initiators are organic polyols in which the YH groups are hydroxyl groups.

Specific illustrations of organic polyols suitable in the practice of this invention include the following: ethylene glycol, diethylene glycol, 2,2,4-trimethyl-1,3-pentanediol, dipropylene glycol, propylene glycol, triethylene glycol, 1,4-cyclohexane dimethanol, neopentyl glycol, 2,2-dimethyl-3-hydroxypropyl 2,2-dimethyl-3-hydroxypropionate, the ethylene and propylene oxide adducts of 2,2-dimethyl-3-hydroxypropyl 2,2-dimethyl-3-hydroxypropionate, triethanolamine, 1,3-butanediol, tetraethylene glycol, 2,2-bis(4-hydroxyphenyl) propane and the ethylene and propylene oxide adducts of 2,2-bis(4-hydroxyphenyl)propane, low molecular weight polymeric polyols derived from ethylene oxide or propylene oxide or tetrahydrofuran (e.g., polytetramethylene glycols such as Polymeg 650),

pentaerythritol, erythritol, glycerine, trimethylolpropane, 1,4-butanediol, 1,6-hexanediol, 2-ethyl-1,3-hexanediol, 1,5-pentanediol, tripropylene glycol, 2,2-bis(4-hydroxycyclohexyl) propane, 1,2,6-hexane triol, 1,3-propanediol, N-methyl diethanolamine, and the like.

The molecular weight (number average, Mn) of the polyol product is less than about 3000, and preferably less than about 1500, e.g. about 500 to about 1200.

The reaction of the lactone and the polyfunctional initiator is preferably carried out in the presence of a catalyst.

The catalysts which may be used herein include one or more organometallic compounds and other metallic compounds such as stannous chloride and other Lewis and protonic acids. Preferred catalysts include stannous octanoate, dibutyltin dilaurate, and other tin compounds; titanates such as tetraisopropyl titanate and butyl titanate; and the like. Any of the catalysts commonly used in ring-opening polymerizations of lactones may be used in the practice of this invention.

The catalyst is used in conventional amounts of from about 0.1 to 50 parts per million based on the total weight of the lactone.

The reaction may be effected in a solvent which must be free of active hydrogen groups such as hydrocarbon solvents. The reaction is preferably carried out neat, in the absence of any solvent.

The reaction may be carried out at atmospheric pressure, although higher or lower pressures may be used.

The reaction is carried out at a temperature of from about 100 to about 200°C, preferably from about 140 to about 170°C. The

reaction is carried out for a period of from about 1 to about 24 hours, preferably from about 3 to about 8 hours. It is important to avoid extended reaction times and excessive reaction temperatures which lead to a gradual decrease in the percent of lactone hydroxyl groups.

It has been found that the polyester polyols of this invention, when prepared by standard techniques such as described above, are transient compositions. Preparation of the polyols requires control of the reaction conditions and termination of the reaction when the level of unreacted lactone monomer initially reaches about 1 mole percent or less of the original lactone charge. The polyol composition at this reaction end-point contains a high level of lactone hydroxyls, y, as defined in this invention. Lower levels of residual lactone monomer, i.e. less than about 0.5%, can be achieved by slightly longer reaction times, particularly at temperatures of 155°C or less, which result in only a minor decrease in the level of lactone hydroxyls.

Prolonged or immoderate reaction conditions, however, yield lower levels of the more highly substituted polyol species and higher levels of the less substituted polyol species. This is particularly true in the polyols initiated with glycols such as diethylene glycol. Continued reaction has been surprisingly found to result in higher levels of the original unsubstituted organic initiator in the polyol product.

This unexpected shift in the polyol composition from a more symmetrical and more highly

substituted product to a less symmetrical, less substituted polyol in which a greater number of the original active hydrogens of the organic initiator are present results in an overall reduction in the percent lactone hydroxyls. This in turn gives a polyol composition having lesser reactivity with functional groups such as isocyanates, epoxides, and melamines. It is therefore advantageous and an object of this invention to maximize the level of fully substituted organic initiator in the polyol product.

The reaction times and temperatures required to prepare the polyester polyols of this invention will vary with the molecular weight of the polyol, the number and nature of active hydrogens in the organic initiator, and the specific catalyst type and amount used. It is an object of this invention to control the reaction so as to minimize further changes in the polyol product initially present when the major part (about 99 percent) of the lactone monomer has been consumed. It is not intended that the polyester polyols of this invention be restricted to any particular process for their preparation, however.

## EXAMPLES

The following examples serve to illustrate specific embodiments of this invention and it is not intended that the invention shall be limited by the examples. The controls are included to illustrate the shift in polyol composition to products not defined by this invention when prolonged reaction times and/or high reaction temperatures are employed.

CONTROL A

A 500 ml reaction flask was equipped with a stirrer, a thermometer fitted with a temperature controller, a heating mantle, a condenser with gas outlet, and a gas sparging tube. The flask was charged with 34.5 g. of diethylene glycol and 141 g. of caprolactone monomer. The mixture was heated to 130°C and held there 30 minutes while sparging with nitrogen. A catalyst charge of 0.002 g. of stannous octanoate (0.5 ml of a solution of 0.4 g. of stannous octanoate in 100 ml diethylene glycol) was added and the flask heated to 195°C over about 30 minutes. Heating was continued about 5.5 hours after the catalyst was added. Analysis of the final reaction mixture by NMR showed 13 mole percent unreacted diethylene glycol, 49 mole percent monosubstituted diethylene glycol, and 38 mole percent disubstituted diethylene glycol. The average length of the polycaprolactone chains, whether on a mono or disubstituted glycol, was about 3.0 capolactone units. The percent lactone hydroxyls in the polyol was therefore 62 percent.

CONTROL B AND EXAMPLES 1 to 5

A reaction flask and procedure similar to that described in Control A was used to prepare the polyols shown in Tables I and II. The exact reaction charge and conditions (time and temperature) are shown in the Tables. The catalyst charge in every case was about 10 parts per million of stannous octanoate.

TABLE I. CONTROLS

| CONTROL | INITIATOR (grams) | CAPROLACTONE (grams) | MOLE RATIO, x, LACTONE/yH | REACTION TEMPERATURE (°C) | REACTION TIME (hours) | MOLE PERCENT POLYOL SPECIES A | B | C | PERCENT LACTONE HYDROXYLS, y | AVERAGE MOLECULAR WEIGHT |
|---|---|---|---|---|---|---|---|---|---|---|
| A | 35.0 DEG | 141 | 1.87 | ~ 190 | ~ 5.5 | 13 | 49 | 38 | 62 | 530 |
| B | 19.1 BD | 157.6 | 3.26 | ~ 190 | ~ 6.5 | 4 | 42 | 54 | 75 | 830 |

A = Unsubstituted
B = Monosubstituted
C = Disubstituted
DEG: diethylene glycol
BD: 1,4-Butanediol

TABLE II. EXAMPLES

| EXAMPLE | INITIATOR (grams) | CAPROLACTONE (grams) | MOLE RATIO, x, LACTONE/yH | REACTION TEMPERATURE (°C) | REACTION TIME (hours) | MOLE PERCENT POLYOL SPECIES A | B | C | PERCENT LACTONE HYDROXYLS, y | AVERAGE MOLECULAR WEIGHT |
|---|---|---|---|---|---|---|---|---|---|---|
| 1 | 350 DEG | 1405 | 1.87 | ~150 | ~9.5 | 3 | 30 | 67 | 82 | 530 |
| 2 | 35.0 DEG | 141 | 1.87 | ~160 | ~2.5 | 3 | 32 | 65 | 81 | 530 |
| 3 | 14.8 DEG | 160.2 | 5.02 | ~160 | ~6.0 | 0 | 9 | 91 | 96 | 12[illegible] |
| 4 | 594 BD | 2906 | 1.93 | ~155 | ~4.5 | 3 | 30 | 67 | 82 | 530 |
| 5 | 380 BD | 3120 | 3.24 | ~160 | ~5.5 | 0 | 16 | 84 | 92 | 830 |

A = Unsubstituted
B = Monosubstituted
C = Disubstituted
DEG: diethylene glycol
BD: 1,4-Butanediol

WHAT IS CLAIMED IS:

1. A polyester polyol having a molecular weight of less than about 3000 and produced from the ring opening reaction of a lactone with a polyfunctional initiator, wherein the minimum percent of lactone hydroxyls, y, in the polyester polyol is a function of the mole ratio, x, of lactone units to active hydrogens in the initiator, and is defined as $y = 52.5x$ for $x>0$ to 1.5 and $y = 2.11x + 75.6$ for $x > 1.5$.

2. A polyester polyol as defined in claim 1 in which the molecular weight is less than about 1500.

3. A polyester polyol as defined in one or both of the claims 1-2 in which the lactone is epsilon-caprolactone.

4. A polyester polyol as defined in one or more of the claims 1-3 in which the polyfunctional initiator is an organic polyol.

5. A process for preparing the polyester polyol of claim 1 which comprises reacting a lactone with a polyfunctional initiator at a temperature of from about 100 to about 200°C until about 99 percent of the lactone has been consumed.

6. A process as defined in claim 5 wherein the reaction is carried out in the presence of a lactone ring opening catalyst.

7. A process as defined in claim 6 wherein the catalyst is selected from stannous octanoate, dibutyltin dilaurate or other tin compounds.

8. A coating produced by cathodic electrodeposition of cationic epoxy urethane systems based on the product of one or more of the claims 1-4.